# EUROPÄISCHE PATENTANMELDUNG

(11) **EP 2 450 599 A2**
(43) Veröffentlichungstag der Anmeldung: **09.05.2012**
(21) Anmeldenummer: 11185367.7
(22) Anmeldetag: 17.10.2011
(51) Int. Cl.: F16H 61/04

(54) **Verfahren zur Steuerung eines Antriebsstrangs**

(30) Priorität: 09.11.2010 DE 102010043590
(71) Anmelder: ZF Friedrichshafen AG, 88038 Friedrichshafen (DE)
(72) Erfinder: Glückler, Johannes, 88045 Friedrichshafen (DE); Maier, Alexander, 88046 Friedrichshafen (DE); Hunold, Bernard, 88046 Friedrichshafen (DE)

(57) **Zusammenfassung**

Die Erfindung betrifft ein Verfahren zur Steuerung eines Antriebsstrangs eines Kraftfahrzeugs, der einen Verbrennungsmotor (VM) mit einer Triebwelle, einen mit der Triebwelle des Verbrennungsmotors in Triebverbindung stehende elektrische Maschine (S/G), ein automatisiertes Schaltgetriebe mit einer Eingangswelle (GE) und mehreren selektiv schaltbaren Gangstufen, sowie eine zwischen der Triebwelle des Verbrennungsmotors und der Eingangswelle des Schaltgetriebes angeordnete automatisierte Reibungskupplung (K) umfasst, wobei ein Gangwechsel des Schaltgetriebes in Verbindung mit einer geeigneten Ansteuerung des Verbrennungsmotors bei zumindest teilweise und/oder zeitweise geschlossener Reibungskupplung erfolgt.

Zur Beschleunigung des Schaltvorgangs und zur Abschwächung von Drehmoment- und Drehzahlspitzen während des Schaltvorgangs wird die elektrische Maschine (S/G) zeitweise als Generator und/oder als Motor betrieben.

## Beschreibung

Die Erfindung betrifft ein Verfahren zur Steuerung eines Antriebsstrangs eines Kraftfahrzeugs gemäß den Merkmalen des Oberbegriffs des Patentanspruchs 1.

Ein Gangwechsel eines automatisierten Schaltgetriebes erfolgt üblicherweise derart, dass zunächst in einem Lastabbau des Verbrennungsmotors das von dem Verbrennungsmotor abgegebene oder aufgenommene Drehmoment (Motormoment) reduziert und eine Reibungskupplung geöffnet wird, wodurch das Schaltgetriebe weitgehend lastfrei wird. Danach wird der vor dem Gangwechsel lastführende Istgang ausgelegt sowie der einzulegende Zielgang synchronisiert und nachfolgend eingelegt. Zur Synchronisierung des Zielgangs wird die Drehzahl der Getriebeeingangswelle bei einer Hochschaltung reduziert und bei einer Rückschaltung erhöht, so dass an den beiden Kupplungshälften der Gangkupplung des Zielgangs weitgehend die gleiche Drehzahl vorliegt.

Bei synchronisierten Gangkupplungen wird das schaltungsbedingte Abbremsen und Beschleunigen der Getriebeeingangswelle über zugeordnete Reibringe bewirkt, die durch die Stellkraft des betreffenden Gangstellers aneinander gedrückt werden. Bei unsynchronisierten Gangkupplungen kann das schaltungsbedingte Abbremsen und Beschleunigen der Getriebeeingangswelle durch Hilfseinrichtungen, wie z.B. mittels einer mit der Getriebeeingangswelle in Triebverbindung stehenden Getriebebremse und/oder einer mit der Getriebeeingangswelle in Triebverbindung stehenden Elektromaschine, oder bei zumindest teilweise geschlossener Reibungskupplung durch den Verbrennungsmotor erfolgen. Nach dem Einlegen des Zielgangs wird die Reibungskupplung wieder vollständig geschlossen und das Motormoment des Verbrennungsmotors wieder aufgebaut.

Ein derart gesteuerter Gangwechsel läuft zwar relativ komfortabel und verschleißarm ab, nimmt aber vergleichsweise viel Zeit in Anspruch und ist mit einer relativ langen Zug- bzw. Schubkraftunterbrechung verbunden. Es sind daher mehrere Verfahren zur Schaltsteuerung automatisierter Schaltgetriebe vorgeschlagen worden, bei denen ein Gangwechsel in Verbindung mit einer geeigneten Ansteuerung des Verbrennungsmotors bei zumindest teilweise und/oder zeitweise geschlossener Reibungskupplung erfolgt.

So ist z.B. in der DE 199 54 605 A1 ein Verfahren zur Steuerung eines automatisierten Schaltgetriebes beschrieben, bei dem ein Gangwechsel im Notbetrieb bei geschlossener Reibungskupplung erfolgt. Hierbei ist vorgesehen, dass das abgegebene oder aufgenommene Drehmoment des Verbrennungsmotors bis auf etwa Null abgebaut und der Istgang dann weitgehend lastfrei ausgelegt wird. Danach wird die Getriebeeingangswelle mittels des Verbrennungsmotors auf die Synchrondrehzahl des Zielgangs verzögert oder beschleunigt und dann der Zielgang eingelegt.

Aus der DE 101 22 158 A1 ist ein Verfahren zur Steuerung eines automatisierten Schaltgetriebes bekannt, bei dem eine Zug-Hochschaltung bis an die Schlupfgrenze einer geöffneten Reibungskupplung erfolgt. Nach dem teilweisen Öffnen der Reibungskupplung wird zunächst das Motormoment abgesenkt, dann der Istgang ausgelegt, und danach der Zielgang asynchron eingelegt. Nach dem Einlegen des Zielgangs wird die Drehzahl des Antriebsmotors durch die Motorsteuerung und/oder das Schließen der Reibungskupplung an die Drehzahl der Getriebeeingangswelle angeglichen, bevor das Motormoment wieder aufgebaut wird. Bei einem für dieses Schaltverfahren geeigneten Schaltgetriebe können die Gangkupplungen mit Ausnahme derjenigen der Anfahrgänge als unsynchronisierte Klauenkupplungen ausgebildet sein.

In der EP 0 676 566 B1 ist ein Verfahren zur Steuerung eines Verbrennungsmotors bei einer Hochschaltung eines automatisierten Schaltgetriebes mit geschlossener Reibungskupplung beschrieben. Demnach wird der Verbrennungsmotor zu Beginn der Hochschaltung steuerungstechnisch von dem Fahrpedal entkoppelt und durch eine Manipulation der Einspritzmenge eine Schwankung der Motordrehzahl erzeugt, die das weitgehend lastfreie Auslegen des Istgangs ermöglicht. Nach dem Auslegen des Istgangs wird die Drehzahl des Verbrennungsmotors durch eine Reduzierung der Einspritzmenge auf die Synchrondrehzahl des Zielgangs geführt, d.h. die Getriebeeingangswelle synchronisiert, so dass der Zielgang eingelegt werden kann. Nach dem Einlegen des Zielgangs wird die Motorsteuerung wieder an das Fahrpedal gekoppelt, d.h. die Einspritzmenge des Verbrennungsmotors zur Erzielung eines entsprechenden Motormomentes erhöht. Das Schaltgetriebe zur Anwendung des Verfahrens ist beispielhaft als ein Gruppengetriebe ausgeführt, das ein mehrstufiges unsynchronisiertes Hauptgetriebe und eine diesem nachgeschaltete, zweistufige und synchronisierte Bereichsgruppe umfasst.

In einem Verfahren zur Steuerung eines einen Verbrennungsmotor, eine automatisierte Reibungskupplung und ein automatisiertes Schaltgetriebe umfassenden Antriebsstrangs nach der DE 102 49 951 A1 ist vorgesehen, dass vor jedem Gangwechsel in Abhängigkeit von erfassten Betriebsparametern anhand von festgelegten Prüfregeln geprüft wird, ob der vorgesehene Schaltvorgang mit geschlossener Reibungskupplung durchgeführt werden kann. Wenn dies der Fall ist, wird der Gangwechsel ohne das Öffnen der Reibungskupplung ausgeführt. Andernfalls erfolgt der Gangwechsel in Verbindung mit dem Öffnen der Reibungskupplung. Das Schaltgetriebe zur Anwendung dieses Steuerungsverfahrens ist beispielhaft als ein Gruppengetriebe ausgeführt, das ein mehrstufiges Hauptgetriebe und eine diesem vorgeschaltete zweistufige Splitgruppe aufweist.

In der DE 10 2006 054 277 A1 ist ein Verfahren zur Durchführung eines Gangwechsels eines bevorzugt unsynchronisierten automatisierten Schaltgetriebes beschrieben, bei dem das Auslegen des Istgangs bei geschlossener Reibungskupplung erfolgt, und die Entscheidung, ob auch das Einlegen des Zielgangs bei geschlossener oder geöffneter Reibungskupplung erfolgen soll, während des Schaltungsablaufs in Abhängigkeit von Betriebsparametern getroffen wird. Wenn das Auslegen des Istgangs nicht innerhalb einer vorgegebenen Zeitspanne abgeschlossen ist, erfolgt der Wechsel auf einen Schaltmodus mit geöffneter Reibungskupplung. Zur Beschleunigung eines gegebenenfalls erforderlichen Öffnens der Reibungskupplung wird diese schon vor der Entscheidung über den Schaltmodus bis nahe an die Schlupfgrenze geöffnet.

Schließlich ist aus der DE 10 2007 010 829 A1 ein Verfahren zur Schaltsteuerung eines automatisierten Gruppengetriebes mit einem mehrstufigen Hauptgetriebe, einer diesem vorgeschalteten zweistufigen Splitgruppe, und einer diesem nachgeschalteten zweistufigen Bereichsgruppe bekannt. Bei einer Bereichsschaltung, bei der zumindest in dem Hauptgetriebe und in der Bereichsgruppe jeweils ein Wechsel der Übersetzungsstufe erfolgt, wird die Ziel-Übersetzungsstufe der Bereichsgruppe durch das teilweise Schließen der Reibungskupplung synchronisiert und nachfolgend eingelegt, nachdem zuvor die Reibungskupplung geöffnet, die Bereichsgruppe nach neutral geschaltet, das Hauptgetriebe umgeschaltet, und parallel dazu der Verbrennungsmotor auf die Synchrondrehzahl des Zielgangs geführt wurde.

Nachteilig ist an derartigen Steuerungsverfahren, dass der Lastabbau eines Verbrennungsmotors zu Beginn eines Schaltvorgangs, der Lastaufbau eines Verbrennungsmotors am Ende eines Schaltvorgangs, und die Drehzahlführung eines Verbrennungsmotors auf die Synchrondrehzahl des Zielgangs aufgrund seines hohen Trägheitsmomentes und der indirekten Steuerung über die Zündung und/oder die Kraftstoffeinspritzung relativ träge erfolgen und somit die Dauer des betreffenden Schaltvorgangs verlängern. Des Weiteren können sich während eines Schaltvorgangs durch die Steuerungsabläufe des Verbrennungsmotors und der Reibungskupplung Drehmomentspitzen und Drehzahlspitzen ergeben, durch die der Schalt- bzw. Fahrkomfort des betreffenden Kraftfahrzeugs beeinträchtigt wird.

Der Erfindung liegt daher die Aufgabe zugrunde, einen Gangwechsel eines automatisierten Schaltgetriebes, das in einem Antriebsstrang eines Kraftfahrzeugs der eingangs genannten Art mit einem Verbrennungsmotor, einer elektrischen Maschine, und einer automatisierten Reibungskupplung angeordnet ist, zu beschleunigen und komfortabler zu gestalten.

Der Erfindung liegt die Erkenntnis zu Grunde, dass eine mit der Triebwelle des Verbrennungsmotors in Triebverbindung stehende elektrische Maschine in einem kurzzeitigen Generatorbetrieb und/oder Motorbetrieb zur Unterstützung und Beschleunigung des Lastabbaus des Verbrennungsmotors zu Beginn eines Schaltvorgangs, des Lastaufbaus am Ende eines Schaltvorgangs, und bei zumindest teilweise geschlossener Reibungskupplung zur Synchronisierung des Zielgangs während eines Schaltvorgangs genutzt werden kann.

In einer elektrischen Maschine sind bekanntlich die Funktionen eines konventionellen elektrischen Motors und eines konventionellen Generators in einem einzigen Aggregat zusammengefasst. Eine elektrische Maschine kann über ein Getriebe, wie z.B. ein Stirnradgetriebe oder ein Umschlingungsgetriebe, mit der Triebwelle des Verbrennungsmotors in Triebverbindung stehen oder unmittelbar mit dieser verbunden sein. Durch die Verwendung einer elektrischen Maschine werden daher Gewicht und Bauraum eingespart und die Komplexität des Verbrennungsmotors reduziert. Zudem kann eine elektrische Maschine zur aktiven Dämpfung der typischen Drehschwingungen eines Verbrennungskolbenmotors genutzt werden.

Demzufolge ist die gestellte Aufgabe erfindungsgemäß dadurch gelöst, dass eine elektrische Maschine zur Beschleunigung des Schaltvorgangs und zur Abschwächung von Drehmoment- und Drehzahlspitzen während des Schaltvorgangs zeitweise als Generator und/oder als Motor betrieben wird.

Die Erfindung geht daher aus von einem an sich bekannten Antriebsstrang eines Kraftfahrzeugs, der einen Verbrennungsmotor mit einer Triebwelle, eine mit der Triebwelle des Verbrennungsmotors in Triebverbindung stehende elektrische Maschine, ein automatisiertes Schaltgetriebe mit einer Eingangswelle und mehreren selektiv schaltbaren Gangstufen, und eine zwischen der Triebwelle des Verbrennungsmotors und der Eingangswelle des Schaltgetriebes angeordnete automatisierte Reibungskupplung umfasst. Wenn bei einem derartigen Antriebsstrang ein Gangwechsel des Schaltgetriebes in Verbindung mit einer geeigneten Ansteuerung des Verbrennungsmotors bei zumindest teilweise und/oder zeitweise geschlossener Reibungskupplung erfolgt, wird die vorhandene elektrische Maschine während des Schaltvorgangs erfindungsgemäß zeitweise als Generator und/oder als Motor betrieben.

Hierdurch kann der betreffende Schaltvorgang gegenüber den bekannten Steuerungsabläufen unter Nutzung der im Vergleich zum Verbrennungsmotor deutlich höheren Steuerungsdynamik der elektrischen Maschine beschleunigt und komfortabler gestaltet werden, ohne dass dafür ein zusätzlicher apparativer Aufwand erforderlich ist.

Demzufolge ist bei einer Zug-Hochschaltung oder einer Zug-Rückschaltung vorgesehen, dass der Lastabbau des Verbrennungsmotors zu Beginn des Schaltvorgangs durch einen kurzzeitigen Generatorbetrieb der elektrischen Maschine unterstützt und beschleunigt wird. Das von dem Verbrennungsmotor abgegebene Antriebsmoment wird in diesem Fall zumindest teilweise von dem im Generatorbetrieb der elektrischen Maschine aufgenommen Drehmoment kompensiert.

Analog dazu ist bei einer Schub-Hochschaltung oder einer Schub-Rückschaltung vorgesehen, dass der Lastabbau des Verbrennungsmotors zu Beginn des Schaltvorgangs durch einen kurzzeitigen Motorbetrieb der elektrischen Maschine unterstützt und beschleunigt wird. Das von dem Verbrennungsmotor im Schleppbetrieb aufgenommene Drehmoment wird in diesem Fall zumindest teilweise von dem im Motorbetrieb der elektrischen Maschine abgegebenen Drehmoment kompensiert.

Bei einer Hochschaltung ist vorgesehen, dass die Synchronisierung des Zielgangs bei zumindest teilweise geschlossener Reibungskupplung durch einen kurzzeitigen Generatorbetrieb der elektrischen Maschine unterstützt und beschleunigt wird, oder alleine durch einen Generatorbetrieb der elektrischen Maschine erfolgt. Die zur Synchronisierung des Zielgangs erforderliche Verzögerung der Getriebeeingangswelle erfolgt in diesem Fall zumindest teilweise durch das im Generatorbetrieb von der elektrischen Maschine aufgenommene Drehmoment.

Analog dazu ist bei einer Rückschaltung vorgesehen, dass die Synchronisierung des Zielgangs bei zumindest teilweise geschlossener Reibungskupplung durch einen kurzzeitigen Motorbetrieb der elektrischen Maschine unterstützt und beschleunigt wird. Die zur Synchronisierung des Zielgangs erforderliche Beschleunigung der Getriebeeingangswelle erfolgt in diesem Fall zumindest teilweise durch das im Motorbetrieb von der elektrischen Maschine abgegebene Drehmoment.

Bei einer Zug-Hochschaltung oder einer Zug-Rückschaltung ist vorgesehen, dass der Lastaufbau des Verbrennungsmotors am Ende des Schaltvorgangs durch einen kurzzeitigen Motorbetrieb der elektrischen Maschine unterstützt und beschleunigt wird. Das im Aufbau befindliche, von dem Verbrennungsmotor abgegebene Antriebsmoment wird in diesem Fall durch das im Motorbetrieb von der elektrischen Maschine abgegebene Drehmoment verstärkt.

Analog dazu ist bei einer Schub-Hochschaltung oder einer Schub-Rückschaltung vorgesehen, dass der Lastaufbau des Verbrennungsmotors am Ende des Schaltvorgangs durch einen kurzzeitigen Generatorbetrieb der elektrischen Maschine unterstützt und beschleunigt wird. Das im Aufbau befindliche, von dem Verbrennungsmotor als Schleppmoment aufgenommene Drehmoment wird in diesem Fall durch das im Generatorbetrieb von der elektrischen Maschine aufgenommene Drehmoment verstärkt.

Eine Zug-Rückschaltung, die bei einem Gruppengetriebe mit einem mehrstufigen Hauptgetriebe und einer diesem vorgeschalteten zweistufigen Splitgruppe als Splitgruppen-Rückschaltung mit geschlossener Reibungskupplung durchgeführt wird, erfolgt erfindungsgemäß mit den Schritten:
a) Lastabbau des Verbrennungsmotors, beschleunigt durch einen Generatorbetrieb der elektrischen Maschine,
b) Auslegen der Ist-Gangstufe des Hauptgetriebes,
c) Umschalten der Splitgruppe von der Ist-Eingangsstufe in die Ziel-Eingangsstufe,
d) Synchronisieren der Ziel-Eingangsstufe der Splitgruppe zwischen dem Verlassen der Ist-Schaltstellung und dem Erreichen der Ziel-Schaltstellung der Splitgruppe durch eine Beschleunigung des Verbrennungsmotors, beschleunigt durch einen Motorbetrieb der elektrischen Maschine,
e) Wiedereinlegen der Ist-Gangstufe des Hauptgetriebes,
f) Lastaufbau des Verbrennungsmotors, beschleunigt durch einen Motorbetrieb der elektrischen Maschine.

Eine Zug-Rückschaltung, die bei einem Gruppengetriebe mit einem mehrstufigen Hauptgetriebe und einer diesem vorgeschalteten zweistufigen Splitgruppe als Hauptgetriebe-Rückschaltung mit geschlossener Reibungskupplung durchgeführt wird, erfolgt erfindungsgemäß mit den Schritten:
a) Lastabbau des Verbrennungsmotors, beschleunigt durch einen Generatorbetrieb der elektrischen Maschine,
c') Umschalten des Hauptgetriebes von der Ist-Gangstufe in die Ziel-Gangstufe,
d') Synchronisieren der Ziel-Gangstufe des Hauptgetriebes zwischen dem Verlassen der Ist-Schaltstellung und dem Erreichen der Ziel-Schaltstellung des Hauptgetriebes durch eine Beschleunigung des Verbrennungsmotors, beschleunigt durch einen Motorbetrieb der elektrischen Maschine,
f) Lastaufbau des Verbrennungsmotors, beschleunigt durch einen Motorbetrieb der elektrischen Maschine.

Eine Zug-Rückschaltung, die bei einem Gruppengetriebe mit einem mehrstufigen Hauptgetriebe und einer diesem vorgeschalteten zweistufigen Splitgruppe als kombinierte Splitgruppen-Hochschaltung und Hauptgetriebe-Rückschaltung mit geschlossener Reibungskupplung durchgeführt wird, erfolgt erfindungsgemäß mit den Schritten:
a) Lastabbau des Verbrennungsmotors, beschleunigt durch einen Generatorbetrieb der elektrischen Maschine,
b) Auslegen der Ist-Gangstufe des Hauptgetriebes,
c) Umschalten der Splitgruppe von der Ist-Eingangsstufe in die Ziel-Eingangsstufe,
d") Synchronisierung der Ziel-Eingangsstufe der Splitgruppe zwischen dem Verlassen der Ist-Schaltstellung und dem Erreichen der Ziel-Schaltstellung der Splitgruppe durch eine Verzögerung des Verbrennungsmotors, beschleunigt durch einen Generatorbetrieb der elektrischen Maschine, oder alleine durch einen Generatorbetrieb der elektrischen Maschine,
d') Synchronisieren der Ziel-Gangstufe des Hauptgetriebes durch eine Beschleunigung des Verbrennungsmotors, beschleunigt durch einen Motorbetrieb der elektrischen Maschine,
e') Einlegen der Ziel-Gangstufe des Hauptgetriebes,
f) Lastaufbau des Verbrennungsmotors, beschleunigt durch einen Motorbetrieb der elektrischen Maschine.

Analog dazu erfolgt eine Zug-Hochschaltung, die bei einem Gruppengetriebe mit einem mehrstufigen Hauptgetriebe und einer diesem vorgeschalteten zweistufigen Splitgruppe als Splitgruppen-Hochschaltung mit geschlossener Reibungskupplung durchgeführt wird, erfindungsgemäß mit den Schritten:
g) Lastabbau des Verbrennungsmotors, beschleunigt durch einen Generatorbetrieb der elektrischen Maschine,
h) Auslegen der Ist-Gangstufe des Hauptgetriebes,
i) Umschalten der Splitgruppe von der Ist-Eingangsstufe in die Ziel-Eingangsstufe,
j) Synchronisieren der Ziel-Eingangsstufe der Splitgruppe zwischen dem Verlassen der Ist-Schaltstellung und dem Erreichen der Ziel-Schaltstellung der Splitgruppe durch eine Verzögerung des Verbrennungsmotors, beschleunigt durch einen Generatorbetrieb der elektrischen Maschine, oder alleine durch einen Generatorbetrieb der elektrischen Maschine,
k) Wiedereinlegen der Ist-Gangstufe des Hauptgetriebes,
l) Lastaufbau des Verbrennungsmotors, beschleunigt durch einen Motorbetrieb der elektrischen Maschine.

Ebenso erfolgt eine Zug-Hochschaltung, die bei einem Gruppengetriebe mit einem mehrstufigen Hauptgetriebe und einer diesem vorgeschalteten zweistufigen Splitgruppe als Hauptgetriebe-Hochschaltung mit geschlossener Reibungskupplung durchgeführt wird, erfindungsgemäß mit den Schritten:
g) Lastabbau des Verbrennungsmotors, beschleunigt durch einen Generatorbetrieb der elektrischen Maschine,
i') Umschalten des Hauptgetriebes von der Ist-Gangstufe in die Ziel-Gangstufe,
j') Synchronisieren der Ziel-Gangstufe des Hauptgetriebes zwischen dem Verlassen der Ist-Schaltstellung und dem Erreichen der Ziel-Schaltstellung des Hauptgetriebes durch eine Verzögerung des Verbrennungsmotors, beschleunigt durch einen Generatorbetrieb der elektrischen Maschine, oder alleine durch einen Generatorbetrieb der elektrischen Maschine,
1) Lastaufbau des Verbrennungsmotors, beschleunigt durch einen Motorbetrieb der elektrischen Maschine.

Auch erfolgt eine Zug-Hochschaltung, die bei einem Gruppengetriebe mit einem mehrstufigen Hauptgetriebe und einer diesem vorgeschalteten zweistufigen Splitgruppe als kombinierte Splitgruppen-Rückschaltung und Hauptgetriebe-Hochschaltung mit geschlossener Reibungskupplung durchgeführt wird, erfindungsgemäß mit den Schritten:
g) Lastabbau des Verbrennungsmotors, beschleunigt durch einen Generatorbetrieb der elektrischen Maschine,
h) Auslegen der Ist-Gangstufe des Hauptgetriebes,
i) Umschalten der Splitgruppe von der Ist-Eingangsstufe in die Ziel-Eingangsstufe,
j") Synchronisieren der Ziel-Eingangsstufe der Splitgruppe zwischen dem Verlassen der Ist-Schaltstellung und dem Erreichen der Ziel-Schaltstellung der Splitgruppe durch eine Beschleunigung des Verbrennungsmotors, beschleunigt durch einen Motorbetrieb der elektrischen Maschine,
j') Synchronisierung der Ziel-Gangstufe des Hauptgetriebes durch eine Verzögerung des Verbrennungsmotors, beschleunigt durch einen Generatorbetrieb der elektrischen Maschine, oder alleine durch einen Generatorbetrieb der elektrischen Maschine,
k') Einlegen der Ziel-Gangstufe des Hauptgetriebes,
l) Lastaufbau des Verbrennungsmotors, beschleunigt durch einen Motorbetrieb der elektrischen Maschine.

Der Lastabbau des Verbrennungsmotors kann jeweils bis zum Erreichen eines Nulldrehmomentes oder bis zum Erreichen eines positiven Restdrehmomentes erfolgen. Im letztgenannten Fall, der eine anschließend schnellere Beschleunigung und einen schnelleren Lastaufbau des Verbrennungsmotors ermöglicht, wird die zum Auslegen der Istgangstufe und zum Einlegen der Ziel-gangstufe erforderliche Lastfreiheit der Getriebeeingangswelle durch die Aufnahme eines entsprechenden Drehmomentes durch die elektrische Maschine im Generatorbetrieb erzeugt.

Eine Zug-Rückschaltung, die bei einem Gruppengetriebe mit einem mehrstufigen Hauptgetriebe und einer diesem vorgeschalteten zweistufigen Splitgruppe als Splitgruppen-Rückschaltung mit zeitweise geöffneter Reibungskupplung durchgeführt wird, erfolgt erfindungsgemäß mit den Schritten:
m) Schnelles Öffnen (Aufreißen) der Reibungskupplung,
n) Lastabbau und Beschleunigung des Verbrennungsmotors auf die Zieldrehzahl der Ziel-Eingangsstufe der Splitgruppe,
o) Umschalten der Splitgruppe von der Ist-Eingangsstufe in die Ziel-Eingangsstufe,
p) Synchronisieren der Ziel-Eingangsstufe der Splitgruppe zwischen dem Verlassen der Ist-Schaltstellung und dem Erreichen der Ziel-Schaltstellung der Splitgruppe durch teilweises Schließen der Reibungskupplung und durch einen Motorbetrieb der elektrischen Maschine,
q) vollständiges Schließen der Reibungskupplung und Lastaufbau des Verbrennungsmotors, beschleunigt durch einen Motorbetrieb der elektrischen Maschine.

Zur Verdeutlichung der Erfindung ist der Beschreibung eine Zeichnung mit Ausführungsbeispielen beigefügt. In dieser zeigt
- Fig. 1: Kupplungszustands-, Drehmoment-, Drehzahl- und Schaltzustandsverläufe während eines erfindungsgemäßen Steuerungsablaufs einer Zug-Rückschaltung eines Gruppengetriebes mit geschlossener Reibungskupplung,
- Fig. 2: Kupplungszustands-, Drehmoment-, Drehzahl- und Schaltzustandsverläufe während eines gegenüber Fig. 1 modifizierten Steuerungsablaufs einer Zug-Rückschaltung eines Gruppengetriebes mit geschlossener Reibungskupplung,
- Fig. 3: Kupplungszustands-, Drehmoment-, Drehzahl- und Schaltzustandsverläufe während eines erfindungsgemäßen Steuerungsablaufs einer Zug-Hochschaltung eines Gruppengetriebes mit geschlossener Reibungskupplung, und
- Fig. 4: Kupplungszustands-, Drehmoment-, Drehzahl- und Schaltzustandsverläufe während eines erfindungsgemäßen Steuerungsablaufs einer Zug-Rückschaltung eines Gruppengetriebes mit zeitweise geöffneter Reibungskupplung.

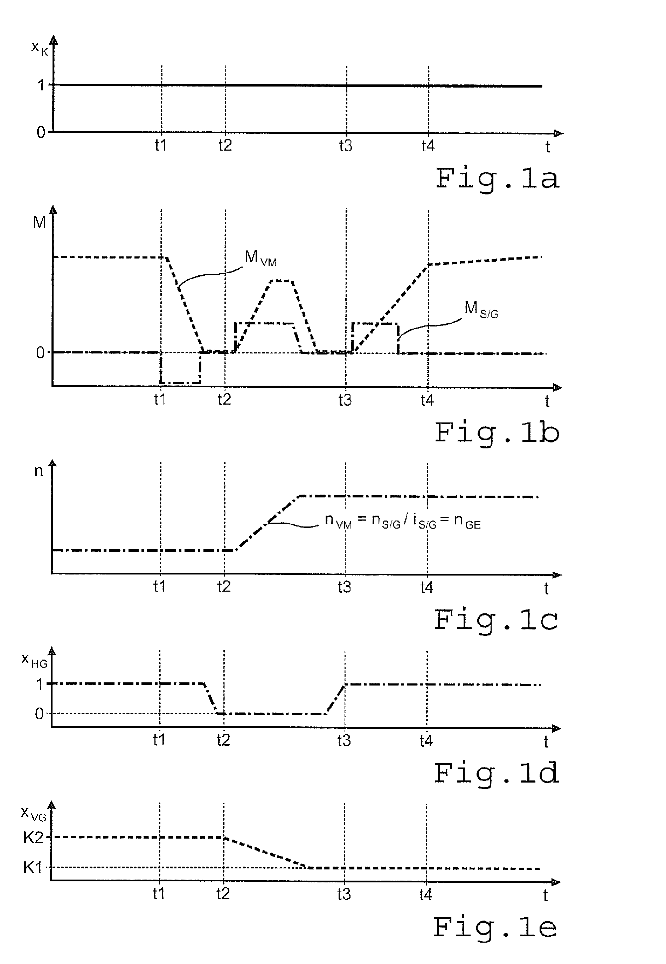

Nachfolgend werden die vorgenannten Schaltvorgänge eines Gruppengetriebes, das ein mehrstufiges Hauptgetriebe HG und eine diesem vorgeschaltete zweistufige Splitgruppe VG umfasst, und dessen Eingangswelle GE über eine automatisierte Reibungskupplung K mit der mit einer elektrischen Maschine S/G in Triebverbindung stehenden Triebwelle eines Verbrennungsmotors VM verbindbar ist, anhand der Diagramme von Fig. 1 bis Fig. 4 erläutert. Der Aufbau eines derartigen Gruppengetriebes kann z.B. der DE 10 2007 010 829 A1 entnommen werden (siehe dortige Fig. 1a und Fig. 1 b).

Die vorliegenden Diagramme von Fig. 1 bis Fig. 4 enthalten jeweils im Teil a den Zeitverlauf des Schließgrades X_{K}(t) der Reibungskupplung K, in Teil b den Drehmomentverlauf M_{VM}(t) des Verbrennungsmotors und den Drehmomentverlauf M_{S/G}(t) der elektrischen Maschine, in Teil c den Drehzahlverlauf nᵥₘ(t) des Verbrennungsmotors und gegebenenfalls den Drehzahlverlauf n_{GE}(t) der Getriebeeingangswelle, in Teil d den Verlauf des Schaltzustands des Hauptgetriebes x_{HG}(t), und in Teil e den Verlauf des Schaltzustands der Splitgruppe x_{VG}(t).

In den Diagrammen von Fig. 1 sind die Zeitverläufe x_{K}(t), M_{VM}(t), M_{S/G}(t), nvm(t), x_{HG}(t) und x_{VG}(t) wiedergegeben, die sich bei einem erfindungsgemäßen Ablauf einer Zug-Rückschaltung ergeben, die als Splitgruppen-Rückschaltung mit geschlossener Reibungskupplung K (x_{K} = 1) durchgeführt wird. Die Schaltung beginnt zum Zeitpunkt t1 mit dem Lastabbau des Verbrennungsmotors VM, der durch einen kurzzeitigen Generatorbetrieb (M_{S/G} < 0) der elektrischen Maschine S/G unterstützt und beschleunigt wird. Hierbei wird das von dem Verbrennungsmotor VM abgegebene Antriebsmoment (M_{VM} > 0) nahezu bis auf Null reduziert (M_{VM} = 0). Danach wird der Antriebsstrang durch das Auslegen der Ist-Gangstufe des Hauptgetriebes HG geöffnet (_{XHG} = 0). Ab dem Zeitpunkt t2 beginnt die Umschaltung der Splitgruppe VG von der Ist-Eingangsstufe K2 auf die Ziel-Eingangsstufe K1.

Nach dem Verlassen der Ist-Schaltstellung (x_{VG} = K2) der Splitgruppe VG, d.h. nach dem Auslegen der Ist-Gangstufe K2, beginnt die Synchronisierung der Ziel-Eingangsstufe K1 der Splitgruppe VG durch eine Beschleunigung des Verbrennungsmotors VM, die mit einer Erhöhung des Motormomentes (M_{VM} > 0) verbunden ist, und die durch einen kurzzeitigen Motorbetrieb (M_{S/G} > 0) der elektrischen Maschine S/G unterstützt und beschleunigt wird. Nach dem Erreichen der Synchrondrehzahl wird die Ziel-Eingangsstufe K1 der Splitgruppe VG eingelegt und nachfolgend der Antriebsstrang durch das Wiedereinlegen der Ist-Gangstufe (x_{HG} = 1) des Hauptgetriebes HG wieder geschlossen.

Danach erfolgt ab dem Zeitpunkt t3 der Lastaufbau des Verbrennungsmotors VM, der durch einen kurzzeitigen Motorbetrieb (M_{S/G} > 0) der elektrischen Maschine S/G im Zeitraum t3-t4 unterstützt und beschleunigt wird. Zum Zeitpunkt t4 ist der Lastaufbau des Verbrennungsmotors VM und damit der gesamte Schaltvorgang beendet.

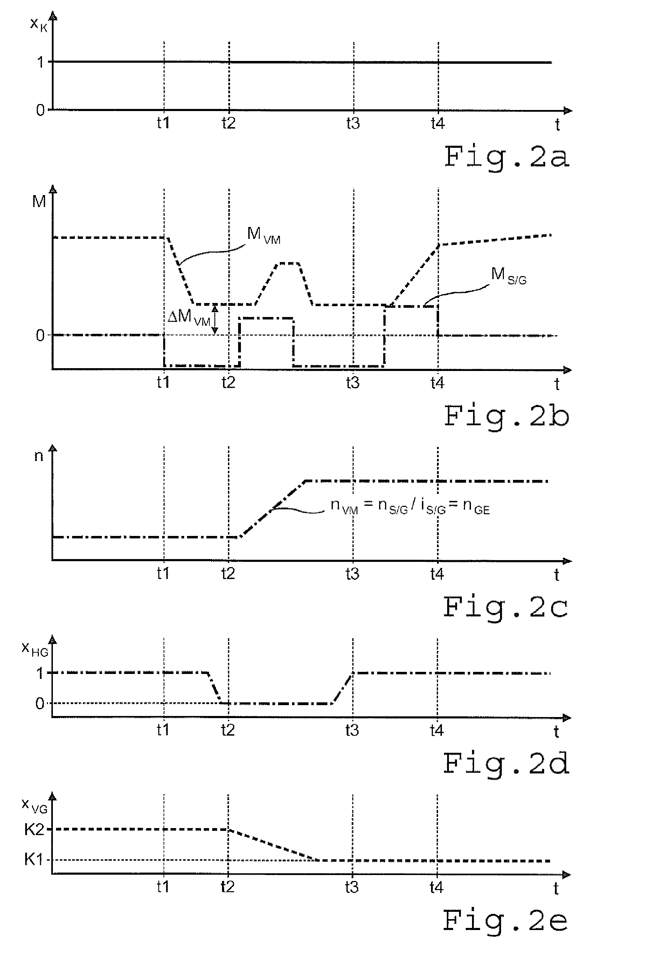

Die in den Diagrammen von Fig. 2 dargestellten Zeitverläufe x_{K}(t), M_{VM}(t), M_{S/G}(t), n_{VM}(t), x_{HG}(t) und x_{VG}(t) zeigen ebenfalls auf einen erfindungsgemäßen Ablauf einer Zug-Rückschaltung, die als Splitgruppen-Rückschaltung mit geschlossener Reibungskupplung (x_{K} = 1) durchgeführt wird. Im Unterschied zu dem Verfahrensablauf nach Fig. 1 erfolgt aber nunmehr der Lastabbau des Verbrennungsmotors VM nicht bis auf einen Wert Null, sondern nur bis zu einem positiven Restdrehmoment (M_{VM} = ΔM_{VM} > 0). Demzufolge wird die Lastfreiheit der Getriebeeingangswelle GE durch die Aufnahme eines entsprechenden Drehmomentes (M_{S/G} = -ΔM_{VM}) durch die elektrischen Maschine S/G im Generatorbetrieb erzielt, der nur durch einen kurzzeitigen Motorbetrieb (M_{S/G} > 0) der elektrischen Maschine S/G zur Synchronisierung der Ziel-Eingangsstufe K1 der Splitgruppe VG unterbrochen und durch den kurzzeitigen Motorbetrieb (M_{S/G} > 0) der elektrischen Maschine S/G zum Lastaufbau am Ende des Schaltvorgangs (t3-t4) beendet wird. Durch den nicht-vollständigen Lastabbau des Verbrennungsmotors während des Schaltvorgangs weist dieser eine höhere Dynamik bei der anschließenden Beschleunigung und dem Lastaufbau auf.

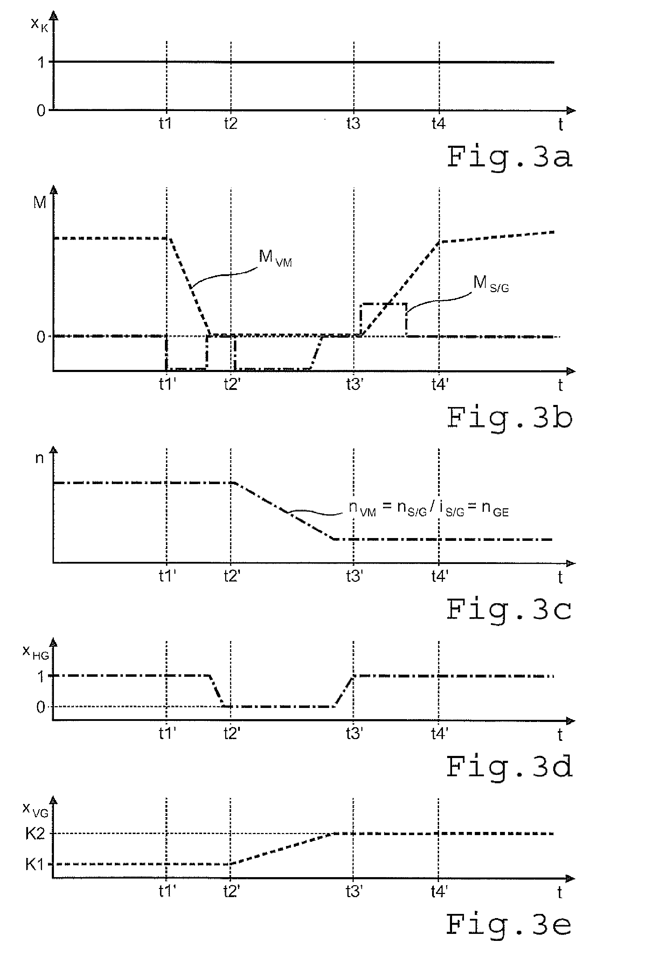

In den Diagrammen von Fig. 3 sind die Zeitverläufe x_{K}(t), M_{VM}(t), M_{S/G}(t), n_{VM}(t), x_{HG}(t) und x_{VG}(t) wiedergegeben, die sich bei einem erfindungsgemäßen Ablauf einer Zug-Hochschaltung ergeben, die als Splitgruppen-Hochschaltung mit geschlossener Reibungskupplung K (x_{K} = 1) durchgeführt wird. Die Schaltung beginnt zum Zeitpunkt t1' mit dem Lastabbau des Verbrennungsmotors VM, der durch einen kurzzeitigen Generatorbetrieb (M_{S/G} < 0) der elektrischen Maschine S/G unterstützt und beschleunigt wird. Hierbei wird das von dem Verbrennungsmotor VM abgegebene Antriebsmoment (M_{VM} > 0) nahezu bis auf Null reduziert (M_{VM} = 0). Danach wird der Antriebsstrang durch das Auslegen der Ist-Gangstufe des Hauptgetriebes HG geöffnet (_{XHG} = 0). Ab dem Zeitpunkt t2' beginnt die Umschaltung der Splitgruppe VG von der Ist-Eingangsstufe K1 auf die Ziel-Eingangsstufe K2. Nach dem Verlassen der Ist-Schaltstellung x_{VG} = K1) der Splitgruppe VG, d.h. nach dem Auslegen der Ist-Gangstufe K1, beginnt die Synchronisierung der Ziel-Eingangsstufe K2 der Splitgruppe VG, die vorliegend alleine durch einen Generatorbetrieb (M_{S/G} < 0) der elektrischen Maschine S/G erfolgt. Nach dem Erreichen der Synchrondrehzahl wird die Ziel-Eingangsstufe K2 der Splitgruppe VG eingelegt und nachfolgend der Antriebsstrang durch das Wiedereinlegen der Ist-Gangstufe (x_{HG} = 1) des Hauptgetriebes HG wieder geschlossen. Danach erfolgt ab dem Zeitpunkt t3' der Lastaufbau des Verbrennungsmotors VM, der durch einen kurzzeitigen Motorbetrieb (M_{S/G} > 0) der elektrischen Maschine S/G unterstützt und beschleunigt wird. Zum Zeitpunkt t4' ist der Lastaufbau des Verbrennungsmotors VM und damit der gesamte Schaltvorgang beendet.

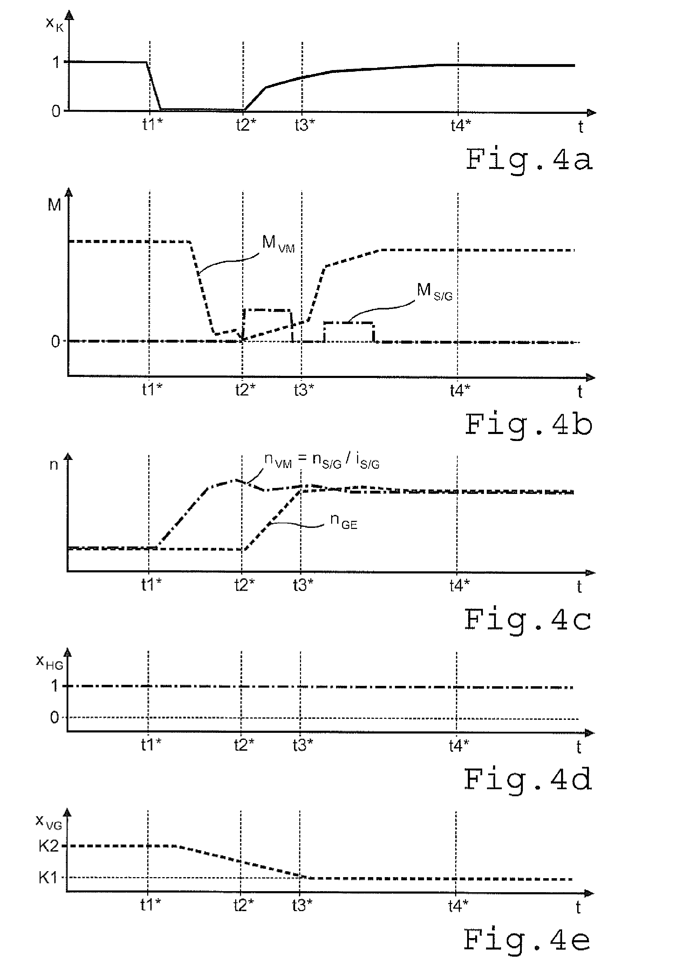

In den Diagrammen von Fig. 4 sind die Zeitverläufe x_{K}(t), M_{VM}(t), M_{S/G}(t), n_{VM}(t), x_{HG}(t) und x_{VG}(t) wiedergegeben, die sich bei einem erfindungsgemäßen Ablauf einer Zug-Rückschaltung ergeben, die als Splitgruppen-Rückschaltung mit zeitweise geöffneter Reibungskupplung K (x_{K} = 0) durchgeführt wird. Die Schaltung beginnt zum Zeitpunkt t1 * mit dem schnellen Öffnen (Aufreißen) der Reibungskupplung K (x_{K} = 0), wonach die Motordrehzahl n_{VM} unter der Wirkung des Überschussmomentes des Verbrennungsmotors ansteigt. Nach dem Öffnen der Reibungskupplung K beginnen in etwa zeitgleich der Lastabbau des Verbrennungsmotors VM und das Umschalten der Splitgruppe VG von der Ist-Eingangsstufe K2 in die Ziel-Eingangsstufe K1. Nach dem Verlassen der Ist-Schaltstellung (x_{VG} = K2) der Splitgruppe VG, d.h. nach dem Auslegen der Ist-Eingangsstufe K2, erfolgt ab dem Zeitpunkt t2* die Synchronisierung des Verbrennungsmotors VM und der Getriebeeingangswelle GE durch das teilweise Schließen der Reibungskupplung K (x_{K} > 0) und durch einen kurzzeitigen Motorbetrieb (M_{S/G} > 0) der elektrischen Maschine S/G. Nach dem Erreichen der Synchrondrehzahl zum Zeitpunkt t3* wird zunächst die Ziel-Eingangsstufe K1 der Splitgruppe VG eingelegt. Danach wird die Reibungskupplung K vollständig geschlossen (x_{K} = 1), und gleichzeitig erfolgt der Lastaufbau des Verbrennungsmotors (VM), der durch einen kurzzeitigen Motorbetrieb (M_{S/G} > 0) der elektrischen Maschine S/G unterstützt und beschleunigt wird. Zum Zeitpunkt t4* ist die Reibungskupplung K vollständig geschlossen (x_{K} = 1) und der Lastaufbau des Verbrennungsmotors beendet, wodurch der gesamte Schaltvorgang abgeschlossen ist. Bei diesem Schaltsteuerungsverfahren bleibt die Ist-Gangstufe des Hauptgetriebes HG im Gegensatz zu den vorbeschriebenen Verfahrensvarianten während des gesamten Schaltungsablaufs eingelegt (x_{HG} = 1).

### Bezugszeichen

- GE: Getriebeeingangswelle
- HG: Hauptgetriebe
- i: Übersetzung
- i_{S/G}: Übersetzung der elektrischen Maschine
- K: Reibungskupplung
- K1: Langsame Eingangsstufe der Vorschaltgruppe, Splitgruppe
- K2: Schnelle Eingangsstufe der Vorschaltgruppe, Splitgruppe
- M: Drehmoment
- M_{S/G}: Drehmoment der elektrischen Maschine
- M_{VM}: Drehmoment des Verbrennungsmotors
- n: Drehzahl
- n_{GE}: Drehzahl der Getriebeeingangswelle
- n_{S/G}: Drehzahl der elektrischen Maschine
- n_{VM}: Motordrehzahl, Drehzahl des Verbrennungsmotors
- S/G: elektrische Maschine
- VG: Vorschaltgruppe, Splitgruppe
- VM: Verbrennungsmotor
- t: Zeit
- t1 - t4: Zeitpunkte
- t1'- t4': Zeitpunkte
- t1*- t4*: Zeitpunkte
- X_{HG}: Schaltstellung des Hauptgetriebes
- X_{K}: Schließgrad der Reibungskupplung
- X_{VG}: Schaltstellung der Vorschaltgruppe, Splitgruppe
- ΔM_{VM}: Restmoment des Verbrennungsmotors

## Patentansprüche

1. Verfahren zur Steuerung eines Antriebsstrangs eines Kraftfahrzeugs, der einen Verbrennungsmotor (VM) mit einer Triebwelle, eine mit der Triebwelle des Verbrennungsmotors in Triebverbindung stehende elektrische Maschine (S/G), ein automatisiertes Schaltgetriebe mit einer Eingangswelle (GE) und mehreren selektiv schaltbaren Gangstufen, und eine zwischen der Triebwelle des Verbrennungsmotors und der Eingangswelle des Schaltgetriebes angeordnete automatisierte Reibungskupplung (K) umfasst, wobei ein Gangwechsel des Schaltgetriebes in Verbindung mit einer geeigneten Ansteuerung des Verbrennungsmotors bei zumindest teilweise und/oder zeitweise geschlossener Reibungskupplung erfolgt, **dadurch gekennzeichnet, dass** die elektrische Maschine (S/G) zur Beschleunigung des Schaltvorgangs und zur Abschwächung von Drehmoment- und Drehzahlspitzen während des Schaltvorgangs zeitweise als Generator und/oder als Motor betrieben wird.

2. Verfahren nach Anspruch 1, **dadurch gekennzeichnet, dass** bei einer Zug-Hochschaltung oder einer Zug-Rückschaltung der Lastabbau des Verbrennungsmotors (VM) zu Beginn des Schaltvorgangs durch einen kurzzeitigen Generatorbetrieb der elektrischen Maschine (M_{S/G} < 0) unterstützt und beschleunigt wird.

3. Verfahren nach Anspruch 1 oder 2, **dadurch gekennzeichnet, dass** bei einer Schub-Hochschaltung oder einer Schub-Rückschaltung der Lastabbau des Verbrennungsmotors (VM) zu Beginn des Schaltvorgangs durch einen kurzzeitigen Motorbetrieb der elektrischen Maschine (M_{S/G} > 0) unterstützt und beschleunigt wird.

4. Verfahren nach wenigstens einem der Ansprüche 1 bis 3, **dadurch gekennzeichnet, dass** bei einer Hochschaltung die Synchronisierung des Zielgangs bei zumindest teilweise geschlossener Reibungskupplung (x_{K} > 0) durch einen kurzzeitigen Generatorbetrieb der elektrischen Maschine (M_{S/G} <0) unterstützt und beschleunigt wird, oder alleine durch einen Generatorbetrieb der elektrischen Maschine erfolgt.

5. Verfahren nach wenigstens einem der Ansprüche 1 bis 4, **dadurch gekennzeichnet, dass** bei einer Rückschaltung die Synchronisierung des Zielgangs bei zumindest teilweise geschlossener Reibungskupplung (x_{K} > 0) durch einen kurzzeitigen Motorbetrieb der elektrischen Maschine (M_{S/G} > 0) unterstützt und beschleunigt wird.

6. Verfahren nach wenigstens einem der Ansprüche 1 bis 5, **dadurch gekennzeichnet, dass** bei einer Zug-Hochschaltung oder einer Zug-Rückschaltung der Lastaufbau des Verbrennungsmotors (VM) am Ende des Schaltvorgangs durch einen kurzzeitigen Motorbetrieb der elektrischen Maschine (M_{S/G} > 0) unterstützt und beschleunigt wird.

7. Verfahren nach wenigstens einem der Ansprüche 1 bis 6, **dadurch gekennzeichnet, dass** bei einer Schub-Hochschaltung oder einer Schub-Rückschaltung der Lastaufbau des Verbrennungsmotors (VM) am Ende des Schaltvorgangs durch einen kurzzeitigen Generatorbetrieb der elektrischen Maschine (M_{S/G} < 0) unterstützt und beschleunigt wird.

8. Verfahren nach einem der Ansprüche 1 bis 7, **dadurch gekennzeichnet, dass** eine Zug-Rückschaltung, die bei einem Gruppengetriebe mit einem mehrstufigen Hauptgetriebe (HG) und einer diesem vorgeschalteten zweistufigen Splitgruppe (VG) als Splitgruppen-Rückschaltung mit geschlossener Reibungskupplung (x_{K} = 1) durchgeführt wird, mit den folgenden Schritten erfolgt:
a) Lastabbau des Verbrennungsmotors (VM), beschleunigt durch einen Generatorbetrieb der elektrischen Maschine (M_{S/G} < 0),
b) Auslegen der Ist-Gangstufe des Hauptgetriebes (X_{HG} = 0),
c) Umschalten der Splitgruppe (VG) von der Ist-Eingangsstufe (K2) in die Ziel-Eingangsstufe (K1),
d) Synchronisieren der Ziel-Eingangsstufe (K1) der Splitgruppe (VG) zwischen dem Verlassen der Ist-Schaltstellung (X_{VG} = K2) und dem Erreichen der Ziel-Schaltstellung (X_{VG} = K1) der Splitgruppe (VG) durch eine Beschleunigung des Verbrennungsmotors (VM), beschleunigt durch einen Motorbetrieb der elektrischen Maschine (M_{S/G} > 0),
e) Wiedereinlegen der Ist-Gangstufe des Hauptgetriebes (X_{HG} = 1),
f) Lastaufbau des Verbrennungsmotors (VM), beschleunigt durch einen Motorbetrieb der elektrischen Maschine (M_{S/G} > 0).

9. Verfahren nach einem der Ansprüche 1 bis 8, **dadurch gekennzeichnet, dass** eine Zug-Rückschaltung, die bei einem Gruppengetriebe mit einem mehrstufigen Hauptgetriebe (HG) und einer diesem vorgeschalteten zweistufigen Splitgruppe (VG) als Hauptgetriebe-Rückschaltung mit geschlossener Reibungskupplung (x_{K} = 1) durchgeführt wird, mit den folgenden Schritten erfolgt:
a) Lastabbau des Verbrennungsmotors (VM), beschleunigt durch einen Generatorbetrieb der elektrischen Maschine (M_{S/G} < 0),
c') Umschalten des Hauptgetriebes (HG) von der Ist-Gangstufe in die Ziel-Gangstufe,
d') Synchronisieren der Ziel-Gangstufe des Hauptgetriebes (HG) zwischen dem Verlassen der Ist-Schaltstellung und dem Erreichen der Ziel-Schaltstellung des Hauptgetriebes (HG) durch eine Beschleunigung des Verbrennungsmotors (VM), beschleunigt durch einen Motorbetrieb der elektrischen Maschine (M_{S/G} > 0),
f) Lastaufbau des Verbrennungsmotors (VM), beschleunigt durch einen Motorbetrieb der elektrischen Maschine (M_{S/G} > 0).

10. Verfahren nach einem der Ansprüche 1 bis 9, **dadurch gekennzeichnet, dass** eine Zug-Rückschaltung, die bei einem Gruppengetriebe mit einem mehrstufigen Hauptgetriebe (HG) und einer diesem vorgeschalteten zweistufigen Splitgruppe (VG) als kombinierte Splitgruppen-Hochschaltung und Hauptgetriebe-Rückschaltung mit geschlossener Reibungskupplung (x_{K} = 1) durchgeführt wird, mit den folgenden Schritten erfolgt:
a) Lastabbau des Verbrennungsmotors (VM), beschleunigt durch einen Generatorbetrieb der elektrischen Maschine (M_{S/G} < 0),
b) Auslegen der Ist-Gangstufe des Hauptgetriebes (x_{HG} = 0),
c) Umschalten der Splitgruppe (VG) von der Ist-Eingangsstufe (K1) in die Ziel-Eingangsstufe (K2),
d") Synchronisierung der Ziel-Eingangsstufe (K2) der Splitgruppe (VG) zwischen dem Verlassen der Ist-Schaltstellung (x_{VG} = K1) und dem Erreichen der Ziel-Schaltstellung (x_{VG} = K2) der Splitgruppe (VG) durch eine Verzögerung des Verbrennungsmotors (VM), beschleunigt durch einen Generatorbetrieb der elektrischen Maschine (M_{S/G} < 0), oder alleine durch einen Generatorbetrieb der elektrischen Maschine (M_{S/G} < 0),
d') Synchronisieren der Ziel-Gangstufe des Hauptgetriebes (HG) durch eine Beschleunigung des Verbrennungsmotors (VM), beschleunigt durch einen Motorbetrieb der elektrischen Maschine (M_{S/G} > 0),
e') Einlegen der Ziel-Gangstufe des Hauptgetriebes (HG),
f) Lastaufbau des Verbrennungsmotors (VM), beschleunigt durch einen Motorbetrieb der elektrischen Maschine (M_{S/G} > 0).

11. Verfahren nach einem der Ansprüche 1 bis 10, **dadurch gekennzeichnet, dass** eine Zug-Hochschaltung, die bei einem Gruppengetriebe mit einem mehrstufigen Hauptgetriebe (HG) und einer diesem vorgeschalteten zweistufigen Splitgruppe (VG) als Splitgruppen-Hochschaltung mit geschlossener Reibungskupplung (x_{K} =1 ) durchgeführt wird, mit den folgenden Schritten erfolgt:
g) Lastabbau des Verbrennungsmotors (VM), beschleunigt durch einen Generatorbetrieb der elektrischen Maschine (M_{S/G} < 0),
h) Auslegen der Ist-Gangstufe des Hauptgetriebes (X_{HG} = 0),
i) Umschalten der Splitgruppe (VG) von der Ist-Eingangsstufe (K1) in die Ziel-Eingangsstufe (K2),
j) Synchronisieren der Ziel-Eingangsstufe (K2) der Splitgruppe (VG) zwischen dem Verlassen der Ist-Schaltstellung (x_{VG} = K1) und dem Erreichen der Ziel-Schaltstellung (x_{VG} = K2) der Splitgruppe (VG) durch eine Verzögerung des Verbrennungsmotors (VM), beschleunigt durch einen Generatorbetrieb der elektrischen Maschine (M_{S/G} < 0), oder alleine durch einen Generatorbetrieb der elektrischen Maschine (M_{S/G} < 0),
k) Wiedereinlegen der Ist-Gangstufe des Hauptgetriebes x_{HG} = 1),
l) Lastaufbau des Verbrennungsmotors (VM), beschleunigt durch einen Motorbetrieb der elektrischen Maschine (M_{S/G} > 1).

12. Verfahren nach einem der Ansprüche 1 bis 11, **dadurch gekennzeichnet, dass** eine Zug-Hochschaltung, die bei einem Gruppengetriebe mit einem mehrstufigen Hauptgetriebe (HG) und einer diesem vorgeschalteten zweistufigen Splitgruppe (VG) als Hauptgetriebe-Hochschaltung mit geschlossener Reibungskupplung (x_{K} = 1) durchgeführt wird, mit den folgenden Schritten erfolgt:
g) Lastabbau des Verbrennungsmotors (VM), beschleunigt durch einen Generatorbetrieb der elektrischen Maschine (M_{S/G} < 0),
i') Umschalten des Hauptgetriebes (HG) von der Ist-Gangstufe in die Ziel-Gangstufe,
j') Synchronisieren der Ziel-Gangstufe des Hauptgetriebes (HG) zwischen dem Verlassen der Ist-Schaltstellung und dem Erreichen der Ziel-Schaltstellung des Hauptgetriebes (HG) durch eine Verzögerung des Verbrennungsmotors (VM), beschleunigt durch einen Generatorbetrieb der elektrischen Maschine (M_{S/G} < 0), oder alleine durch einen Generatorbetrieb der elektrischen Maschine (M_{S/G} < 0),
l) Lastaufbau des Verbrennungsmotors (VM), beschleunigt durch einen Motorbetrieb der elektrischen Maschine (M_{S/G} > 0).

13. Verfahren nach einem der Ansprüche 1 bis 12, **dadurch gekennzeichnet, dass** eine Zug-Hochschaltung, die bei einem Gruppengetriebe mit einem mehrstufigen Hauptgetriebe (HG) und einer diesem vorgeschalteten zweistufigen Splitgruppe (VG) als kombinierte Splitgruppen-Rückschaltung und Hauptgetriebe-Hochschaltung mit geschlossener Reibungskupplung (x_{K} = 1) durchgeführt wird, mit den folgenden Schritten erfolgt:
g) Lastabbau des Verbrennungsmotors (VM), beschleunigt durch einen Generatorbetrieb der elektrischen Maschine (M_{S/G} < 0),
h) Auslegen der Ist-Gangstufe des Hauptgetriebes (x_{HG} = 0),
i) Umschalten der Splitgruppe (VG) von der Ist-Eingangsstufe (K2) in die Ziel-Eingangsstufe (K1),
j") Synchronisieren der Ziel-Eingangsstufe (K1) der Splitgruppe (VG) zwischen dem Verlassen der Ist-Schaltstellung (x_{VG} = K2) und dem Erreichen der Ziel-Schaltstellung (X_{VG} = K1) der Splitgruppe (VG) durch eine Beschleunigung des Verbrennungsmotors (VM), beschleunigt durch einen Motorbetrieb der elektrischen Maschine (M_{S/G} > 0),
j') Synchronisierung der Ziel-Gangstufe des Hauptgetriebes (HG) durch eine Verzögerung des Verbrennungsmotors (VM), beschleunigt durch einen Generatorbetrieb der elektrischen Maschine (M_{S/G} < 0), oder alleine durch einen Generatorbetrieb der elektrischen Maschine (M_{S/G} < 0),
k') Einlegen der Ziel-Gangstufe des Hauptgetriebes (HG),
1) Lastaufbau des Verbrennungsmotors (VM), beschleunigt durch einen Motorbetrieb der elektrischen Maschine (M_{S/G} > 0).

14. Verfahren nach wenigstens einem der Ansprüche 8 bis 13, **dadurch gekennzeichnet, dass** der Lastabbau des Verbrennungsmotors (VM) bis zum Erreichen eines Nulldrehmomentes (M_{VM} = 0) erfolgt.

15. Verfahren nach wenigstens einem der Ansprüche 8 bis 13, **dadurch gekennzeichnet, dass** der Lastabbau des Verbrennungsmotors (VM) bis zum Erreichen eines positiven Restdrehmomentes (M_{VM} = ΔM_{VM} > 0) erfolgt, und die Lastfreiheit der Getriebeeingangswelle (GE) durch die Aufnahme eines entsprechenden Drehmomentes (M_{S/G} = -ΔM_{VM} < 0) durch die elektrische Maschine (S/G) im Generatorbetrieb erzeugt wird.

16. Verfahren nach einem der Ansprüche 1 bis 15, **dadurch gekennzeichnet, dass** eine Zug-Rückschaltung, die bei einem Gruppengetriebe mit einem mehrstufigen Hauptgetriebe (HG) und einer diesem vorgeschalteten zweistufigen Splitgruppe (VG) als Splitgruppen-Rückschaltung mit zeitweise geöffneter Reibungskupplung (x_{K} = 0)) durchgeführt wird, mit den folgenden Schritten erfolgt:
m) Schnelles Öffnen (Aufreißen) der Reibungskupplung (x_{K} = 0),
n) Lastabbau und Beschleunigung des Verbrennungsmotors (VM) auf die Zieldrehzahl der Ziel-Eingangsstufe (K1) der Splitgruppe (VG),
o) Umschalten der Splitgruppe (VG) von der Ist-Eingangsstufe (K2) in die Ziel-Eingangsstufe (K1),
p) Synchronisieren der Ziel-Eingangsstufe (K1) der Splitgruppe (VG) zwischen dem Verlassen der Ist-Schaltstellung (X_{VG} = K2) und dem Erreichen der Ziel-Schaltstellung (X_{VG} = K1) der Splitgruppe (VG) durch teilweises Schließen der Reibungskupplung (x_{K} > 0) und durch einen Motorbetrieb der elektrischen Maschine (M_{S/G} > 0),
q) vollständiges Schließen der Reibungskupplung (X_{K} = 1) und Lastaufbau des Verbrennungsmotors (VM), beschleunigt durch einen Motorbetrieb der elektrischen Maschine (M_{S/G} > 0).
